# EUROPEAN PATENT APPLICATION

(11) **EP 2 704 488 A1**
(43) Date of publication of application: **05.03.2014**
(21) Application number: 13003838.3
(22) Date of filing: 01.08.2013
(51) Int. Cl.: H04W 36/32

(54) **Method and apparatus for prioritizing small cells in a wireless communication system**

(30) Priority: 03.08.2012 US 201261679287 P
(71) Applicant: Innovative Sonic Corporation, Taipei City 10049 (TW)
(72) Inventor: Guo, Yu-Hsuan, 10049 Taipei City (TW); Ou, Meng-Hui, 10049 Taipei City (TW)
(74) Representative: Hoefer & Partner

(57) **Abstract**

A method and apparatus are disclosed for prioritizing small cells in a wireless communication network. In one embodiment, the method is implemented in a UE. The method includes the UE prioritizing small cells or a frequency of the small cells in a cell selection or cell reselection evaluation process.

## Description

### CROSS-REFERENCE TO RELATED APPLICATIONS

The present Application claims the benefit of U.S. Provisional Patent Application Serial No. No. 61/679,287 filed on August 3, 2012, the entire disclosure of which is incorporated herein by reference.

### FIELD

This disclosure generally relates to wireless communication networks, and more particularly, to a method and apparatus for prioritizing small cells in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

A method and apparatus are disclosed for prioritizing small cells in a wireless communication network. In one embodiment, the method is implemented in a UE. The method includes the UE prioritizing small cells or a frequency of the small cells in a cell selection or cell reselection evaluation process.

### BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3 GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. RP-110709, "Revised WID on Study on for Hetnet Mobility Enhancements for LTE", Alcatel-Lucent; R2-123107, TR 36.839 v0.6.0, "E-UTRA; Mobility Enhancements in Heterogeneous Networks (Release 11)"; R2-122896, "How to reduce state3 handover failure rate in macro-to-pico handover", LG; TS 36.304 v10.6.0, "E-UTRA; UE procedures in idle mode (Release 10)"; and 3GPP TS 36.304 V11.0.0, "E-UTRA; UE procedures in idle mode". The standards and documents listed above are hereby expressly incorporated herein.

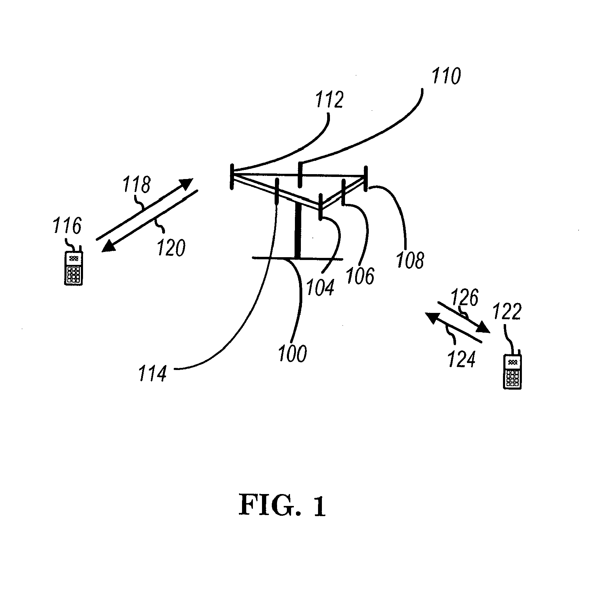

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

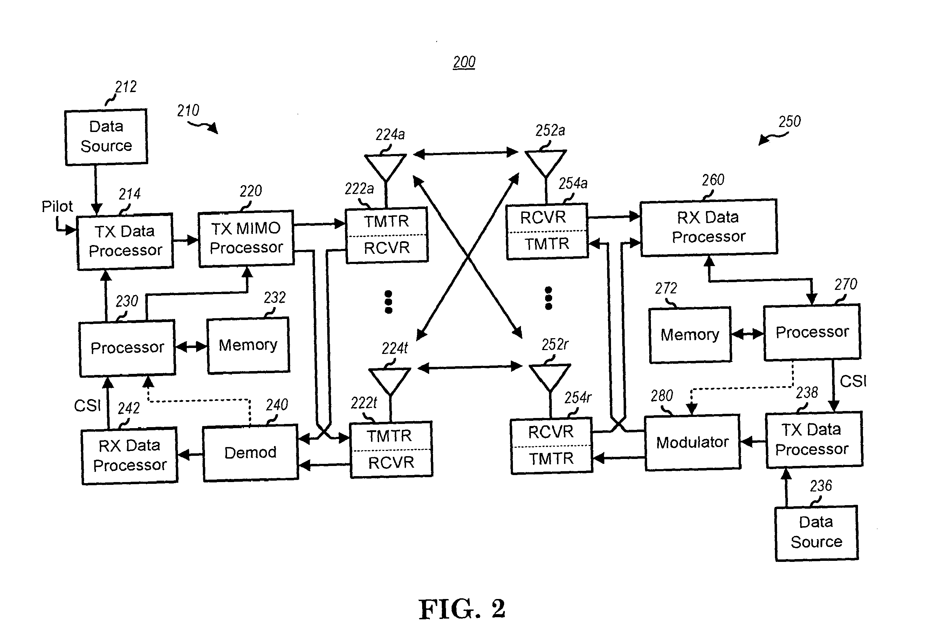

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

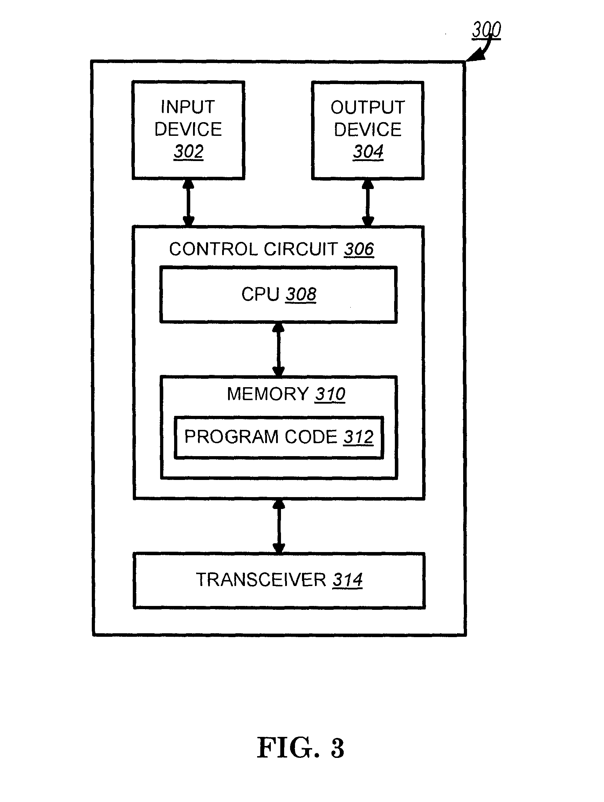

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

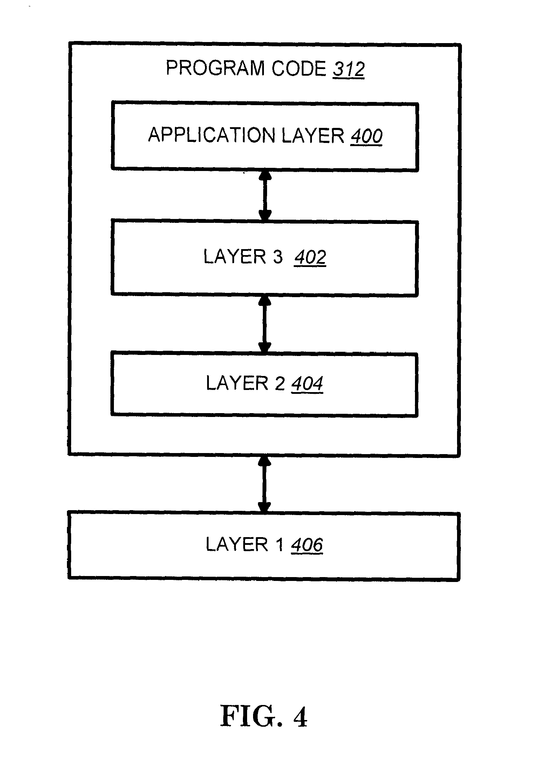

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

A study item called "study on HetNet mobility enhancements for LTE" has been agreed in 3GPP RP-110709. In addition, 3GPP RP-110709 provides the following justification:
Seamless and robust mobility of users from LTE macro to small BTS-layer, and vice versa, shall be supported to enable offload benefits. Scenarios with more BTS-layers and multiple carriers also means that there are more potential error cases, and therefore additional reestablishment procedures could help improve the overall system robustness.
Efficient small cell discovery is important to ensure efficient offload from macro to small cells, and is therefore recommended to be studied in more details - especially for case where cells are on different carriers. Today autonomous UE mobility state estimation is based purely on number of experienced cell changes, but without explicitly taken the cell-size into account. This may cause some unfortunate effects in HetNet (Heterogeneous Network) scenarios, so it is suggested to study related improvements; e.g. to ensure good solutions for avoiding high-mobility users on small BTS layer.

3GPP TR 36.839 v0.6.0, which corresponds to 3GPP RP-110709 has been created and kept updated. The content of the latest update was discussed in 3GPP RAN2 E-mail discussion [78#53], and provides the following description:

### 5.6.2 Overall observations on Mobility speed estimation

On mobility state estimation (MSE) and its impact on mobility performance, it was observed that the MSE is not as accurate in HetNet environments as in macro only deployments since it does not take into account cell sizes.

It was however agreed that possible enhancements to the UE-based MSE should serve the purpose of enhanced mobility performance (not only for the sake of enhancing the MSE estimate). There is consensus that enhancements should be considered to improve the mobility performance of HetNet. This includes UE and network based mechanisms.

### 6.1 Deployment scenarios

Small cells can be deployed for various reasons, resulting in a heterogeneous network comprising small cells of different sizes/types (e.g. micro, pico, femto). One expected scenario is the offloading of users from macro layer to small cell layer where the macro layer and small cell layer are on different carrier frequencies. The study focussed on a scenario where one macro frequency provides full coverage and where pico cells are provided on second frequency layer for offloading purposes including means to improve perceived QoS on hot spot locations. For inter-frequency small cell detection, the study will focus on the following use case where the UE does inter-frequency small cell measurements for a carrier that is expected to have nonuniform coverage (e.g. hotspot deployment) for offloading/load balancing purposes.

### 6.2 Objectives for inter-frequency small cell measurements

The objective is to optimize the data offloading potential (e.g. maximize the amount of data that is transmitted in pico cells rather than in macro cells; maximize the time a UE stays out of the macro cell) with the following criteria:
Criteria 1)UE power consumption for inter-frequency small cell measurements in HetNet deployments should be minimised.
Criteria 2) Any interruptions on the serving cell(s) due to inter-frequency small cell measurements should be minimised.
Criteria 3) Inter-frequency mobility performance should not be degraded by measuring inter-frequency small cells.
Criteria 4) Mobility performance of legacy UEs should not be degraded to improve inter-frequency small cell detection by Rel-11 UEs.

The impact to UE power consumption depends on how often and for how long a UE performs inter-frequency measurements. The study evaluates, in particular, UE power consumption relative to how much offloading opportunity and QoS benefit is lost e.g., due to delayed detection of the small cell.

The study also investigates whether the same findings apply also to detection of candidate SCells on the second frequency layer.

Enhancements were evaluated against mechanisms that can be realized with available functionality.

Small cells, such as pico cells, can provide offloading opportunities for a UE in a HetNet environment. However, according to 3GPP TR 36.839 v0.6.0, the mobility performance for a high speed UE is not so good when connecting to small cells. For example, it has been proposed in 3GPP R2-122896 that handover to pico cells should be skipped for a high speed UE. On the other hand, it has also been proposed that the data offloading potential should be maximized.

For a UE in idle mode, UE mobility (for example, cell selection and cell reselection) is mainly controlled by the UE. In the cell reselection evaluation process, the reselection priorities handling is specified in 3GPP TS 36.304 v10.6.0 as follows:

### 5.2.4.1 Reselection priorities handling

Absolute priorities of different E-UTRAN frequencies or inter-RAT frequencies may be provided to the UE in the system information, in the *RRCConnectionRelease* message, or by inheriting from another RAT at inter-RAT cell (re)selection. In the case of system information, an E-UTRAN frequency or inter-RAT frequency may be listed without providing a priority (i.e. the field *cellReselectionPriority* is absent for that frequency). If priorities are provided in dedicated signalling, the UE shall ignore all the priorities provided in system information. If UE is in *camped on any cell* state, UE shall only apply the priorities provided by system information from current cell, and the UE preserves priorities provided by dedicated signalling unless specified otherwise. When the UE in *camped normally* state, has only dedicated priorities other than for the current frequency, the UE shall consider the current frequency to be the lowest priority frequency (i.e. lower than the eight network configured values). While the UE is camped on a suitable CSG cell, the UE shall always consider the current frequency to be the highest priority frequency (i.e. higher than the eight network configured values), irrespective of any other priority value allocated to this frequency. If the UE has knowledge on which frequency an MBMS service of interest is provided, it may consider that frequency to be the highest priority during the MBMS session [2] as long as it reselects cells broadcasting SIB13.

In order to maximize the offloading potential while considering the mobility performance, some rule should be specified for the idle UE mobility in a HetNet environment. Otherwise, a lot of signaling for handover would be required to maximize the offloading gain.

In one embodiment, the concept is to prioritize the frequency of small cells for a UE in a cell reselection (or cell selection) process. Then when a UE enters connected mode to transmit some data, it can be offloaded from macro cells. But since the mobility performance for a high speed UE in small cells is not so good, it would be better to apply the prioritization to low speed UE (rather than high speed UE).

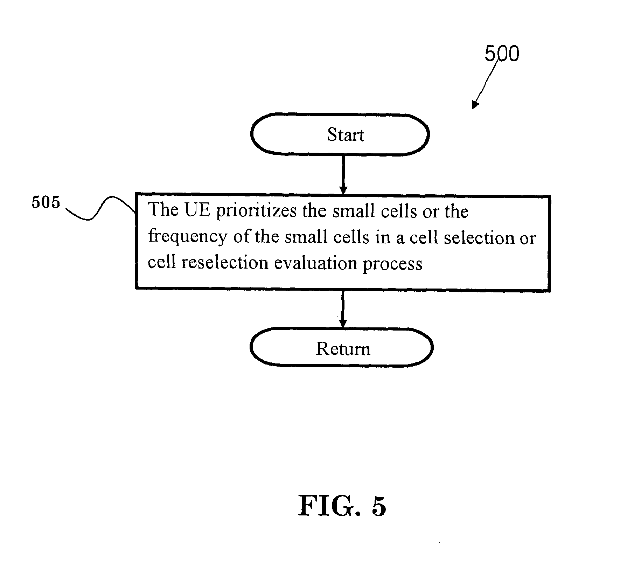

FIG. 5 is a flow chart 500 in accordance with one exemplary embodiment. In step 505, the UE prioritizes the small cells or the frequency of the small cells in a cell selection or cell reselection evaluation process. In one embodiment, the UE would consider the small cells or the frequency of the small cells to be in a highest priority frequency. Furthermore, the UE could be in idle mode and/or in a camped normally state. The UE could also be in slow speed, is not moving in high speed, or is in a normal mobility state (as discussed in 3GPP TS 36.304 V11.0.0) or a medium mobility state (as specified in 3GPP TS 36.304 V11.0.0). In addition, if the UE is moving in high speed or is in a high mobility state (as discussed in 3GPP TS 36.304 V11.0.0), the UE would de-prioritize the small cells or the frequency of the small cells, or would prioritize the big cells (such as macro cells) or the frequency of the big cells. Also, the state of the speed of the UE could be determined using a threshold. In another embodiment, the priorities for the small cells or for the frequency of small cells are not provided in a dedicated signaling.

In one embodiment, the small cells could be pico cells, micro cells, and/or femto cells. And the small cells could be deployed in a frequency layer different from a frequency layer in which the macro cells are deployed. The UE may be aware of the frequency of small cells based on the configuration provided by network. Furthermore, the small cells would indicate its cell type or its neighbor's cell type, such as pico cell, macro cell, small cell, etc., in system information.

Referring back to FIGs. 3 and 4, in one embodiment, the device 300 implements a UE and includes a program code 312 stored in memory 310. In one embodiment, the CPU 308 could execute the program code 312 to enable the UE to prioritize small cells or a frequency of the small cells in a cell selection or cell reselection evaluation process. In addition, the CPU 308 can execute the program code 312 to perform some or all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method implemented in a UE (User Equipment) (116, 122, 250, 300) for prioritizing small cells, **characterized in that** the method comprising:
the UE (116, 122, 250, 300) prioritizing small cells or a frequency of the small cells in a cell selection or cell reselection evaluation process.

2. The method of claim 1, **characterized in that** the UE (116, 122, 250, 300) considers the small cells or the frequency of the small cells to be in a highest priority frequency.

3. The method of claim 1, **characterized in that** priorities for the small cells or the frequency of the small cells are not provided in dedicated signaling.

4. The method of claim 1, **characterized in that** the UE (116, 122, 250, 300) is in idle mode and/or in a camped normally state.

5. The method of claim 1, **characterized in that** the UE (116, 122, 250, 300) prioritizes macro cells or a frequency of the macro cells if the UE is moving in high speed or is in a high mobility state.

6. The method of claim 1, **characterized in that** the UE (116, 122, 250, 300) de-prioritizes the small cells or the frequency of the small cells if the UE is moving in high speed or is in a high mobility state.

7. The method of claim 1, **characterized in that** the UE (116, 122, 250, 300) is in low speed, is not moving in high speed, is in a normal mobility state or is in a medium mobility state.

8. The method of claim 1, **characterized in that** the small cells are deployed in a frequency layer different from a frequency layer in which macro cells are deployed.

9. The method of claim 1, **characterized in that** the small cells are pico cells, micro cells, and/or femto cells.

10. The method of claim 1, **characterized in that** a small cell would indicate its neighbor cell type in system information.

11. A UE (User Equipment) (116, 122, 250, 300) in a wireless communications system for prioritizing small cells, the UE (116, 122, 250, 300) comprising:
a control circuit (306) for realizing functions of the UE (116, 122, 250, 300);
a central processing unit (308) coupled to the control circuit (306) for executing a program code (312) to operate the control circuit (306); and
a memory (310) coupled to the central processing unit (308) for storing the program code (312);
wherein the program code (312) **characterized in that**:
prioritizing small cells or a frequency of the small cells in a cell selection or cell reselection evaluation process.

12. The UE of claim 11, **characterized in that** the UE (116, 122, 250, 300) considers the small cells or the frequency of the small cells to be in a highest priority frequency.

13. The UE of claim 11, **characterized in that** priorities for the small cells or the frequency of the small cells are not provided in dedicated signaling.

14. The UE of claim 11, **characterized in that** the UE (116, 122, 250, 300) is in idle mode and/or in a camped normally state.

15. The UE of claim 11, **characterized in that** the UE (116, 122, 250, 300) prioritizes macro cells or a frequency of the macro cells if the UE (116, 122, 250, 300) is moving in high speed or is in a high mobility state.

16. The UE of claim 11, **characterized in that** the UE (116, 122, 250, 300) de-prioritizes the small cells or the frequency of the small cells if the UE (116, 122, 250, 300) is moving in high speed or is in a high mobility state.

17. The UE of claim 11, **characterized in that** the UE (116, 122, 250, 300) is in low speed, is not moving in high speed, is in a normal mobility state or is in a medium mobility state.

18. The UE of claim 11, **characterized in that** the small cells are deployed in a frequency layer different from a frequency layer in which macro cells are deployed.

19. The UE of claim 11, **characterized in that** the small cells are pico cells, micro cells, and/or femto cells.

20. The UE of claim 11, **characterized in that** a small cell would indicate its neighbor cell type in system information.
